# EUROPEAN PATENT APPLICATION

(11) **EP 2 193 898 A1**
(43) Date of publication of application: **09.06.2010**
(21) Application number: 09169500.7
(22) Date of filing: 04.09.2009
(51) Int. Cl.: B27K 3/48

(54) **Use of DAE, TDAE and/or MES as protection for wood**

(30) Priority: 18.11.2008 ES 200803284
(71) Applicant: REPSOL YPF S.A., 28046 Madrid (ES)
(72) Inventor: Rojo Gonzalez, José Carlos, 28931 Mostoles (ES); Diestre Redondo, Ernesto, 28931 Mostoles (ES); Romero Palazon, Eduardo, 28931 Mostoles (ES); Ingemar Svensson, Gustaf, 20730 Azpeitia (ES); Munne Caballero, Oriol, 20730 Azpeitia (ES); Rekarte Cowie, Iona, 20730 Azpeitia (ES)
(74) Representative: Pons Ariño, Angel

(57) **Abstract**

Use of oils derived from petroleum refining, DAE, TDAE, MES or any of their combinations as protection for wood against xylophagous organisms , degradation by humidity and for structural stability. In addition, the invention relates to the use of these oils together with other biocides, more specifically fungicides or insecticides.

## Description

The present invention relates to the use of oils from petroleum selected from a list that comprises DAE, TDAE, MES or any combinations of these, as protection for wood against xylophagous organisms and degradation by humidity. In addition, the invention relates to the use of these oils together with other biocides, more specifically fungicides and insecticides, which in turn can be inorganic or organic.

### STATE OF THE ART

The oils coming from petroleum are liquid products made up of a complex mixture of diverse hydrocarbons. The class and proportion of these hydrocarbons determines the chemical nature of these oils, which can be classified into:
- Paraffin oils. The major components of their composition are aliphatic hydrocarbons, of the general formula CₙH₂ₙ₊₂, with smaller proportions of other aromatic or naphthenic hydrocarbons.
- Naphthenic oils. The major components of their composition are naphthenic hydrocarbons, of the general formula CₙH₂ₙ.
- Aromatic oils. The major components of their composition are aromatic hydrocarbons, of the general formula CₙH₂ₙ₋ₓ.

The aromatic oils in general are included in mixtures in the processing of rubber to reduce viscosity, enabling its preparation and production during the operations of lamination and extrusion and the incorporation of the other ingredients to appreciably improve their dispersion.

The toxicity of the aromatic oils is due to the moderate polycyclic aromatic hydrocarbon content. The analysis of the content of these hydrocarbons is performed by the method of extraction with dimethyl sulphoxide (DMSO), according to the IP-346 standard. According to European Directive 67/548, the aromatic hydrocarbon content according to IP-346 is related to the carcinogenicity and the level at which the product is not considered cancer-causing is below 3%.

With the aim of reducing exposure to carcinogenic agents in the workplace, aromatic oils are treated by a selective extraction process to reduce the aromatic hydrocarbon concentration according to IP-346 to below 3%, generically known as TDAE (Treated Distillate Aromatic Extract), with a DAE (Distillate Aromatic Extract) being a conventional aromatic extract obtained by selective extraction from the lubricant base material.

Another alternative is presented in the oils known as MES (Mild Extraction Solvates), which are obtained from lubricant units, not as a coproduct of the process of dearomatisation in aromatic extraction units, but rather as a main product. In this case, the severity of the extraction treatment is much less to achieve a certain aromaticity, higher, at least, to that of a lubricant base.

Therefore, during petroleum refining, in addition to obtaining the main products, diesel and petrol, a series of co-products with different properties are obtained. In the majority of occasions, and in the specific case of the aromatic oils TDAE and MES, these co-products are not classified as toxic and have no risk phrases on their labelling according to European Directive 67/548.

The aromatic oils in general are included in mixtures in the processing of rubber to reduce viscosity, enabling its preparation and production during the operations of lamination and extrusion and the incorporation of the other ingredients to appreciably improve their dispersion. Thus, for example, in the patent application US2008009564, a rubber composition containing TDAE and MES and its use in tyres is disclosed.

The durability of wood exposed to the weather, as a structural or decorative element, is very limited, especially in the face of xylophagous organisms attack. Traditionally for more aggressive environments, such as wood in contact with the soil (telephone posts, railway sleepers, fencing, etc.), creosote has been used as a protective agent. Impregnation of wood with creosote by means of autoclaving using the vacuum-pressure system enables penetration and retention levels to be achieved in the wood to guarantee its high durability.

The use and marketing of creosote has been significantly limited in recent years due to the high polycyclic aromatic hydrocarbon content. Other alternative products are emerged based on water-soluble salts, such as the salts of Copper-Chromium-Arsenic (CCA) and Copper-Chromium-Boron (CCB) and compounds based on Cu. However, these products have also been questioned due to the presence in their composition of heavy metals (chromium, arsenic or copper) and their low capacity for improving the dimensional stability of the treated wood.

### DESCRIPTION OF THE INVENTION

The present invention provides a new use for the oils from petroleum fractionation and selected from DAE, TDAE, MES and their combinations, as protection for wood. The nature of these products guarantees the absence of components of high toxicity, such as in the case of poly-aromatics (for example benzo(a)pyrene) present in creosote.

These are liquid or semi-solid products at ambient temperature and are thermoplastic, that is, they become totally fluid by the application of heat at moderate temperatures (< 50 ºC). Their nature gives them a high waterproofing ability. Their semi-solid nature at ambient temperature gives rise to impermeable films that isolate the substrate from the surrounding medium.

These oils, DAE, TDAE, MES and their combinations, which are products derived from petroleum refining obtained during vacuum distillation, are considered a suitable alternative to creosote for the protection of woods, due to their low content in poly-aromatic compounds and due to their waterproofing property which prevents attack by xylophagous organisms.

The waterproofing effect is especially interesting due to the dimensional stability it provides to the wood, preventing its swelling in conditions of high humidity.

The properties of these oils make them especially suitable for woods that come into contact with the soil, such as, for example but without limitation, telephone posts, railway sleepers or fencing.

The volatility of these products is very low due to the refining process to which they have been subjected. Among the fractions of the refining process used for obtaining these products are the fractions obtained by vacuum distillation; these products are among those distilling at temperatures above 350 ºC, this elevated temperature givies an idea of the very low concentration of volatile compounds present.

As a result of the low concentration of volatile compounds, the flash point is above 200 ºC, the risks compared with creosote, from manipulation and the possibility of fires is significantly reduced. Equally, the emission of volatile organic compounds is minimal, which has a positive effect on the working environment and reduces the production of disagreeable smells during its use.

Therefore, a first aspect of the present invention comprises the use of the oils derived from petroleum refining selected from the list comprising DAE, TDAE, MES or any of their combinations as protection for wood, preferably against xylophagous agents and/or degradation due to humidity.

In this way, the effectiveness of these oils, DAE and/or TDAE and/or MES, as protection for wood could be based on their waterproofing property, preventing the absorption of water by the wood and the development of fungus and other xylophagous organisms . In addition, the presence of low concentrations of aromatic compounds of low molecular weight prevents the degradation of the product, ensuring its continuing effectiveness.

These oils of the invention also enable the dimensional stability of the wood by preventing it from absorbing water and preventing the swelling caused as a consequence. Also, these compounds are not corrosive to metals or other construction materials; on the contrary, they are recommended in some situations as anti-corrosion protection due to their property of preventing contact with water.

Another aspect of the present invention relates to a protective agent for wood comprising at least an oil, obtained from petroleum refining, that is selected from DAE, TDAE, MES or any of their combinations.

A preferred embodiment of the present invention comprises a biologically effective quantity of these oils in the range of between 10 kg/m³ and 300 kg/m³ of wood to be treated, more preferably in the range of between 120 kg/m³ and 250 kg/m³.

A preferred embodiment of the present invention comprises the use of the oils DAE, TDAE and/or MES together with other biocides to obtain a composition of a protective agent for the wood. Preferably, the biocides are fungicides or insecticides, which in turn can be inorganic or organic.

The inorganic fungicidal/insecticidal agents are preferably copper compounds, more preferably copper hydroxide.

The organic fungicides are preferably of the triazole family, for example but without limitation, tebuconazole. These types of fungicides are easily soluble and stable in the base products. They are biologically effective in wood at approximately 0.3 kg/m³, but their use together with the oils of the invention requires a lower quantity.

The organic insecticides could be pyrethroid type compounds, for example but without limitation, permethrin. It has good solubility in the extract. It is effective in wood at around 0.12 kg/m³, and better in the presence of any of the oils of the invention.

The treatment of wood with the oils of the invention, with or without other biocidal agents is performed by the use of these oils in an autoclave at a temperature higher than 40 ºC and with the usual systems of vacuum-pressure or double vacuum.

Throughout the description and the claims, the word "comprise" and its variants does not intend to exclude other technical characteristics, additives, components or steps. For experts in the field, other objects, advantages and characteristics of the invention will become apparent from the description and from the practice of the invention. The following examples and figure are provided by way of illustration and are not intended to be limiting of the present invention.

### DESCRIPTION OF THE FIGURE

**Fig**. 1.- Shows the retention of the product by the measurement of the density of stratified test cores.

### EXAMPLES

The invention is illustrated below by some tests performed by the inventors showing the effectiveness of the use of the oils of the invention to protect wood against xylophagous organisms.

### Example 1

An extract of TDAE has the following properties:

| | **TDAE** |
|---|---|
| **Kinematic viscosity (ASTM D-445) 100 ºC (cSt)** | 5.478 |
| **Density (ASTM D-4052) 70 ºC (g/ml)** | 0.8778 |
| **Pour point (ASTM D-97) (ºC)** | +27 |
| **P.C.A.'s (IP-346) (% p/p)** | 2.8 |

was evaluated for the treatment of sapwood of Scots pine (Pinus sylvestris) originating in Soria (Spain). This wood is classified as impregnable according to the European standard UNE-EN350-2.

In the first place, different methods of impregnation were tried with the aim of reaching total penetration of the sapwood. The following table shows the conditions used to achieve this objective:

| **Temperature** **(ºC)** | **Treatment** **Type** | **Pressure** | **Duration** | **Penetration** **(mm)** |
|---|---|---|---|---|
| 40 | Pressure | 7 bar | 2h* | Total penetration |

| | | | | |
|---|---|---|---|---|
| (*) 1h with pressure and 1 h at ambient pressure. | | | | |

The treated core samples were maintained in a stabilisation chamber (20 ºC, 65% humidity) until constant weight according to the European standard. That is, the core samples showed a loss of mass of less than 0.1% of the total weight of the core sample.

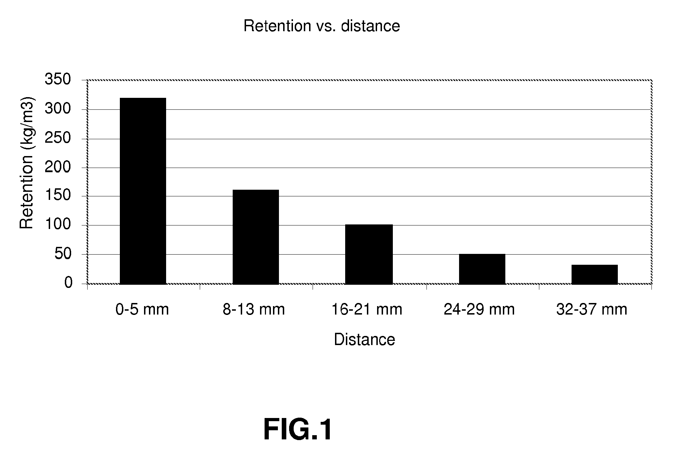

The retention of the product was calculated by the measurement of density in stratified core samples, which were obtained from the surface of the treated wood to the most central part of the sapwood. The results are shown in Figure 1.

For the study of the surface, core samples of Scots pine with different retentions were allowed to stabilise and then were exposed to 40 ºC to study the effect of temperature on the treatment.

Firstly, the weight loss by the samples due to evaporation at each time interval was measured. This was performed simply by taking the core samples out of the oven. Then the quantity of the product that migrated to the surface (exudation) due to the treatment with temperature was measured. This was performed by weighing after cleaning the surface of the core sample with absorbent paper.

The results showed that at the test temperature, the weight loss during the first few days was greater when the core samples contained less product. This was due to the hydrophobic effect that the extract confers on the wood. The more product, the less the wood can absorb environmental humidity. Therefore, on exposing the treated wood to elevated temperatures, the water evaporates first and for this reason the core samples with the least product showed the highest weight loss in the first few days. Once the water has evaporated, the weight loss was slightly greater in the core samples containing more product. This higher loss is to be expected as these core samples contain a greater amount of volatile compounds. However, the amount of weight loss was always less than 10%.

As regards surface exudation, this was negligible at 40 ºC even at retentions as high as 470 kg/m³.

### Example 2

After confirming the penetrability of the extract in pine wood, a series of biological tests was then performed (Screening tests) of short duration (2, 8 or 16 weeks) to estimate the effective retention of the extract. The core samples treated to different levels of retention were compared with untreated control samples with the same dimensions. In addition, a biocide based on copper-chromium was taken as a reference. The results are summarised below:

### 2.1. SCREENING TEST BROWN ROT FUNGUS

### (BASED ON THE EN 113:96 STANDARD)

Core samples of 30x10x5 mm of Scots pine sapwood were selected for each treatment. The samples were weighed and the impregnations made in an autoclave, obtaining the absorptions and retentions of the formulated product that are shown in the results table referred to above. After treatment and stabilisation in an air-conditioned chamber at 20 ºC and 65% relative humidity for a period of 3 weeks, the treated samples were placed in contact with the medium that had previously been prepared and inoculated with the fungus.

In this case, the biological material used was a fungus species and strain causing brown rot specified in the standard:

| **FUNGUS** | **STRAIN** |
|---|---|
| *Coniophora puteana* (Schumacher ex Fries) | BAM Ebw. 15 |

The fungus was allowed to grow for 4 weeks and then the previously sterilised core samples were placed in contact with it, placing a treated core sample with its control on a support (to avoid absorbing too much humidity from the medium and prevent transferring components of the product into the medium) in each jar in order to evaluate the differences between the two.

After 8 weeks of contact of the core samples with the pure fungus growth, the existing covering from the samples was removed and after a process of artificial drying to constant weight, the weight loss was determined in accordance with the standard.

The weight loss after 8 weeks of exposure was calculated. The core samples with the following properties were rejected:
- The humidity content was greater than 80% or less than 25%.
- They were contaminated with another organism (acarus).
- If the control showed a weight loss less than that indicated for each fungus.

The effectiveness threshold of a protector was included between the two limiting values corresponding to:
- The lowest concentration that protected the wood.
- The concentration immediately below the former in the series for which the wood was not sufficiently protected.

**Table 1. Screening test to evaluate the effectiveness of the extract against xylophagous fungus of brown rot, using the basidiomycete fungus Coniophora puteana. The calculations include a correction factor due to weight losses by evaporation.**

| **RESULTS OF SCREENING WITH BROWN ROT** | | | |
|---|---|---|---|
| **Product retention (kg/m³)** | **Corrected weight loss in treated samples (%)** | **Weight loss in controls (%)** | **improvement factor (%)** |
| **220** | 14 | 63 | 78 |
| **140** | 14 | 53 | 74 |

| | | | |
|---|---|---|---|
| *Improvement factor: weight loss control - weight loss samples/weight of control | | | |

The results with the basiomycete fungus *Coniophora puteana* showed that the effective retention is around 220 kg/m³.

### 2.2. SCREENING TEST SOFT ROT FUNGUS

### (BASED ON THE ENV 807:01 STANDARD)

Core samples of 30x10x5 mm of Scots pine sapwood were selected for each treatment. The samples were weighed and the impregnations made in an autoclave, obtaining the absorptions and retentions of the formulated product that are shown in the results table referred to above. After treatment the samples were stabilised in an air-conditioned chamber at 20 ºC and 65% relative humidity for 3 weeks.

The screening test for soft rot attempts to reproduce the conditions of a Class 4 Use (direct contact with the soil) in an accelerated way. The test samples were buried almost completely in an aggressive medium: bioactive soil where they were exposed to attack by a variety of soil microorganisms. Among these microorganisms, the soft rot fungus and bacteria are noteworthy for their virulence.

In essence, core samples treated at different retentions were exposed for a specific time during this test. After the time had elapsed (16 weeks), the degradation of the wood was evaluated by loss of weight of the samples.

The application of some correction factors to the weight loss, due to possible changes in weight not linked to the biological degradation processes, have to be taken into account.

After 16 weeks of exposure, the samples were taken out and weighed to calculate the weight loss during this period of time. This weight loss was compared with the weight loss of samples treated with the reference product. If the results are very different, the product is not considered as good at the retention tested.

**Table 2. Screening test to evaluate the effectiveness of the extract against xylophagous fungus of soft rot, using a biologically active substrate. The calculations include a correction factor due to weight losses by evaporation.**

| **RESULTS OF SCREENING WITH SOFT ROT** | | | |
|---|---|---|---|
| **Product retention** **(kg/m³)** | **Corrected weight loss in treated samples** **(%)** | **Weight loss in controls** **(%)** | **improvement factor** **(%)** |
| **240** | 3.8 | 19 | 80 |
| **120** | 6.6 | 19 | 65 |
| **Reference (copper-chromium)** | 3.6 | 19 | 81 |

The screening test for soft rot by weight loss that was closest to the reference product corresponded to retention of extract of 240 kg/m³.

### 2.3. SCREENING TEST TERMITES

### (BASED ON THE EN 117:05 STANDARD)

Core samples of 30x10x5 mm of Scots pine sapwood were selected for each treatment. The samples were weighed and the impregnations made in an autoclave, obtaining the absorptions and retentions of the formulated product that are shown in the results table referred to above.

After treatment and stabilisation in an air-conditioned chamber at 20 ºC and 65% relative humidity for a period of 3 weeks, the treated samples were placed in contact with Petri dishes that contained 30 g of previously humidified fine white quartz sand. Then 50 workers, 1 soldier and 2 nymphs termites were introduced into each dish.

The test equipment was kept in an air-conditioned chamber at 27 ºC/85% relative humidity for 15 days.

At the end of the test, the following parameters were evaluated in accordance with the EN 117:05 standard:
- Termite mortality.
- Degradation of the surface of the core sample (measurement of the surface affected and the depth of the attack).
- Presence of contamination by fungus.

The termite attack was evaluated by its location, extension and depth in the wood core samples according to the following classification:
0 No attack.
1 Attempts at attack>
   i. Scratches or superficial holes, the depth of which cannot be measured or
   ii. Attack in a zone less than 30 mm² and 0.5 mm in depth.
   iii. Combination of i and ii.
2 Light attack.
   i. Superficial attack of a depth less than 1 mm and limited to an extension less than a tenth of the surface of the core sample or
   ii. Single perforation with a maximum depth of 3 mm.
   iii. Combination of i and ii.
3 Medium attack.
   i. Superficial attack of a depth less than 1 mm and limited to an extension greater than a tenth of the surface of the core sample or
   ii. Erosion between 1 and 3 mm in depth that does not exceed a tenth of the surface of the core sample or
   iii. Isolated perforations with a depth greater than 3 mm and which do not extend into caverns.
   iv. Combination of i, ii and iii.
4 Strong attack.
   i. Erosion over an extension greater than a tenth of the surface of the core sample or
   ii. Penetrating attack greater than 3 mm in depth extending into caverns within the mass of the core sample and possibly reaching an advanced stage of destruction.
   iii. Combination of i and ii.

The test is valid if at least three of the untreated control core samples have an evaluation of 4 and a proportion of survivors greater than 50%. The test is still deemed valid if one of the control samples does not satisfy these conditions due to an explainable event, such as fungus.

The effectiveness threshold of a protector was included between the two limiting values corresponding to:
- The lowest concentration that protected the wood, that is, the concentration at which none of the core samples showed an attack greater than 1.
- The immediately lower concentration in the series for which the wood is not sufficiently protected, that is, the concentration at which one or several core samples showed an attack at a level equal to or greater than 2.

**Table 3.- Screening test to evaluate the effectiveness of the extract against termites of the species Reticulitermes.**

| **RESULTS SCREENING TERMITES** | | |
|---|---|---|
| **Retention of the product** **(kg/m³)** | **Degradation of the treated samples** | **Degradation of the control samples** |
| **250** | 1 | 4 |
| | 1 | 4 |
| | 0 | 4 |
| **125** | 2 | 4 |
| | 2 | 4 |
| | 2 | 4 |

The results for termite attack indicated that the effective value is between 125 kg/m³ and 250 kg/m³ of extract, as in general terms the values reached at 125 kg/m³ were not considered sufficiently effective and those reached at 250 kg/m³ were effective.

## Claims

1. Use of oils derived from petroleum refining selected from the list comprising DAE (Distillate Aromatic Extract), TDAE (Treated Distillate Aromatic Extract), MES (Mild Extraction Solvates) or any of their combinations as protective agents for wood.

2. Use of the oils according to claim 1 as protection for wood against xylophagous organisms.

3. Use of the oils according to claim 1 as protection for wood against degradation by humidity.

4. Use of the oils according to any of the claims 1 to 3 to act as dimensional stabilisers of wood.

5. Protective agent for wood that comprises at least an oil selected from the oils DAE, TDAE or MES.

6. Protective agent according to claim 5 where the quantity of oil is between 10 kg and 300 kg per m³ of wood to be treated.

7. Protective agent according to claim 6 where the quantity of oil is between 120 kg and 250 kg per m³ of wood to be treated.

8. Protective agent according to any of the claims 5 to 7 that additionally comprises another biocide.

9. Protective agent according to claim 8 where the biocides are inorganic or organic fungicides or insecticides.

10. Protective agent according to claim 9 where the inorganic fungicide or insecticide agent is a copper compound.

11. Protective agent according to claim 10 where the copper compound is copper hydroxide.

12. Protective agent according to claim 9 where the organic fungicide is a triazole compound.

13. Procedure for the treatment of wood by the use of a protective agent according to any of the claims 5 to 12 in an autoclave at a temperature greater than 40 ºC.

14. Procedure according to claim 13 in which systems of vacuum-pressure or double vacuum are additionally used.
